(19) Europäisches Patentamt / European Patent Office / Office européen des brevets

(11) **EP 2 129 214 B1**

(12) **EUROPEAN PATENT SPECIFICATION**

(45) Date of publication and mention
of the grant of the patent:
**22.09.2010 Bulletin 2010/38**

(51) Int Cl.:
***A01K 1/12*** *(2006.01)*     ***A01K 5/02*** *(2006.01)*

(21) Application number: **08723831.7**

(22) Date of filing: **27.02.2008**

(86) International application number:
**PCT/NL2008/000059**

(87) International publication number:
**WO 2008/118005 (02.10.2008 Gazette 2008/40)**

(54) **ASSEMBLY OF A MILKING ROBOT WITH A MILKING ROBOT FEEDING PLACE, AND A DEVICE FOR GRIPPING AND DISPLACING MATERIAL**

ANORDNUNG EINES MELKROBOTERS MIT MELKROBOTERFUTTERSTELLE SOWIE VORRICHTUNG ZUM HALTEN UND VERSTELLEN VON MATERIAL

ENSEMBLE ROBOT DE TRAITE COMPOSÉ D'UN EMPLACEMENT D'ALIMENTATION DE ROBOT DE TRAITE ET D'UN DISPOSITIF PERMETTANT DE SAISIR ET DE DÉPLACER DES MATIÈRES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.03.2007 NL 1033589**

(43) Date of publication of application:
**09.12.2009 Bulletin 2009/50**

(73) Proprietor: **Maasland N.V.**
**3147 PA Maassluis (NL)**

(72) Inventor: **VAN DEN BERG, Karel**
**NL-2971 VB Bleskensgraaf (NL)**

(74) Representative: **Jennen, Peter Leonardus Hendricus**
**Octrooibureau Van der Lely NV**
**Weverskade 110**
**3147 PA Maassluis (NL)**

(56) References cited:
**EP-A- 1 523 880**     **EP-A- 1 523 881**

**Description**

The invention relates to a device for gripping and displacing material, such as, for example, roughage and/or concentrate for animals.

An assembly of such a device with a feeding place is known from the not published Dutch patent application NL-1030090.

The invention aims at providing a device of the mentioned type which is accurate and flexible in use.

According to the invention, for this purpose, a device of the above-described type comprises the features of claim 1. By means of the sensor it is possible to determine very accurately the distance to an object, such as material present in a feeding place, such as feed. This can then, for example, be gripped very accurately by means of the gripper.

The invention also relates to an assembly comprising such a device and a feeding place, such as, advantageously, a milking robot with a milking robot feeding place, such as a milking robot feed container. In practice, this is a useful, economical combination. The feeding place, for example a feed alley, may be disposed separately from the milking robot, the control means being suitable for displacing the gripper to the feeding place and for controlling the gripper to supply the material to the feeding place.

Specific advantageous characteristics and properties of the sensor will be described hereinafter, although it is emphasized here that the fact that a distance can be measured for a plurality of receivers at the same time provides many advantages in the formation of, for example, a spatial image of the environment. Below, there will first be described some particular embodiments and applications.

Advantageously the device and/or the feeding place, and more advantageously the milking robot feeding place, are/is provided with contents determining means for determining the weight and/or the volume of, for example, the material present in the milking robot feeding place and for supplying a weight signal and a quantity signal, respectively, to the control means. This makes it possible to supply material in accurately metered portions to, for example, the milking robot feeding place.

The device and/or the assembly are/is preferably provided with a cleaning device for cleaning the gripper. As a result thereof, it is possible to improve the hygiene of the assembly, for example to counteract contamination by frequent use.

An automatic cleaning can be obtained if, in an embodiment of an assembly according to the invention, the gripper is movable by the control means towards the cleaning device, the cleaning device being automatically activated by the control means when the gripper is present at the cleaning device.

Although the gripper is capable of gripping and displacing already mixed material, material can be mixed as desired in an embodiment of the device and/or the assembly according to the invention, provided with a stationary mixing device for mixing material, wherein the control means are suitable for displacing the gripper to the mixing device and for controlling the gripper to supply the material to the mixing device, and wherein the control means are suitable for controlling the gripper to grip material mixed by the mixing device and to displace the mixed material to a feeding place. The mixing device preferably comprises a self-emptying, rotatable drum.

If a feeding place comprises a plurality of feed containers, each feed container can be filled with an individual sort of material, for example concentrate, or roughage.

A preferred embodiment of the device or the assembly according to the invention is provided with a display screen, and the gripper is then provided with a camera for recording images, the recorded images being displayable on the display screen. This makes it possible to inspect the stable or the area within which the gripper can be displaced. The images can be examined by a farmer or automatically be analysed, it being possible to alarm the farmer in case of deviations. The camera advantageously comprises the sensor.

In particular, the sensor and/or the sensor image processing means are/is arranged to process the image as a grey tone values image. In this manner, it is possible to obtain additional information to judge and recognize objects, for example by means of differences in reflection.

In particular if the device or the assembly is provided with a milking robot for automatically connecting a teat cup to a teat of an animal, it is possible to determine by means of said milking robot how many animals will make use of the milking robot within a particular period of time. Determination of the supplied or still present amount of feed may be of importance here.

In a preferred embodiment of the device or the assembly according to the invention, the camera is provided with a microphone for recording sounds, and the display screen is provided with a loudspeaker for reproducing the recorded sounds.

In order to prevent that during transport or lifting of the gripper material parts fall unintentionally from the gripper, in an embodiment of the device or the assembly according to the invention, the device comprises control means with an operating element by means of which, after the material has been gripped by means of the gripper, a collecting element can be brought from an inactive position into a further position in which the collecting element is able to collect material which is unintentionally lost by the gripper. According to a further inventive feature, after the collecting element has been brought into the further position by means of the operating element, the collecting element of the collecting device will be located remotely from the lower side of the gripper. In this manner the collecting element acts as a passive element during gripping the material and as an active collecting element after gripping the material. According to again another inventive feature, after the collecting element has been brought into the inactive position by means of the operating element, the collecting element will be located beside the gripper. In this manner the gripper is not impeded by the collecting element during gripping the material. According to a further embodiment according to the invention, after the collecting element has been brought into the inactive position by means of the operating element, the collecting element will be located at the same level as or above the lower side of the gripper. In a preferred embodiment according to the invention, the collecting element is located in its inactive position at a higher level than the upper side of the gripper. In order to enable in a simple manner the material collected by the collecting element to leave the collecting element during emptying the gripper, there is provided, preferably at one side of the collecting element, an aperture via which the material collected can leave the collecting element. In order to grip the material to be gripped as uniformly as possible from the storage place and/or to drop it as uniformly as possible at the destination, the device comprises a means with the aid of which the distribution and/or the height and/or the height difference of the material to be gripped and/or the material already dropped are/is determined. The means is, for example, a feeler. This means advantageously comprises the sensor. An accurate 3D image can thus be obtained quickly.

Advantageously, the device and/or the assembly comprise/comprises predetermined information regarding the distribution in height and/or the volume of the material, as well as a comparator which is arranged to compare the image obtained by means of the sensor with the predetermined information. It is thus possible to determine whether material has been removed or added. For example, a decreased volume may be an indication of feeding damage by vermin or theft, and an increased volume may be an indication of an unexpected object in or on the material, such as a person or a forgotten object. In such a case, an alarm signal can be given by means of an alarm device provided for this purpose. This enhances safety.

According to an advantageous inventive feature, the sensor is disposed on the device and/or the assembly, such as beside the material to be gripped and/or at the place where the material is dropped. According to a further inventive feature, the control means are controlled automatically by means of the signals supplied by the aforementioned sensor. In this manner the device is capable of working fully autonomously, without the supervision of an operator. According to a further inventive feature, the control takes place in such a manner that, if there is a height difference in the material to be gripped, the material located at the highest or substantially the highest level will always be the first to be gripped and/or the material will be dropped at that place where the level of the dropped material is the lowest or substantially the lowest. In order to be able to displace the material to be gripped in vertical direction, according to a further inventive feature, the gripper is connected to an accordion-like hingeable arm construction. According to again another inventive feature, the gripper is fastened on a displaceable suspension structure. The other side of the accordion-like hingeable arm construction is preferably connected to the suspension device for the gripper. According to again another inventive feature, the material can be displaced along a rail along which the suspension device is displaceable. According to again another exemplary embodiment, the device is disposed on an autonomous vehicle. The latter embodiment has the advantage that the material can be displaced via a route to be determined arbitrarily. In a preferred embodiment according to the invention, the collecting device is rotatably fitted to the suspension device, preferably about a horizontal pivot axis. According to a further inventive feature, the device comprises a feeding column provided with one or more feed troughs and a chute hopper for dropping the material gripped by the gripper. According to a further inventive feature, the feeding column comprises a metering mechanism for metering, from the chute hopper, the material to be supplied to the feed trough or feed troughs. According to again another inventive feature, the device is provided with contents determining means for determining the weight and/or the volume of the material present. According to again another inventive feature, the device comprises an alarm device and/or an interruptor which supply/supplies a signal if there is insufficient material, i.e. no material or hardly any material, to be gripped by the gripper. In this manner it is possible that the device is put out of operation temporarily and/or that the attention of an operator is drawn to the fact that there is no more material to be picked up by the device. According to again another inventive feature, the device comprises means with the aid of which the amount of material gripped and/or dropped is determined. The means comprise, for example, weighing means and, advantageously, the sensor which can form an accurate 3D image, on the basis of which the volume and consequently the weight can be determined.

According to a further inventive feature, the device or the assembly comprises material determining means, such as, for example, a camera with image analysis equipment and/or an odour sensor, with the aid of which it is determined what sort of material is present to be gripped and/or what material has been gripped. With the aid of material determining means it is thus possible, if different sorts of material to be gripped are present, to make a choice from the material sorts. According to again another aspect of the invention, the device comprises material quality determining means, such as, for example, an odour sensor and/or a colour sensor, with the aid of which the quality of the material gripped and/or to be gripped is determined. With the aid of these material quality determining means it is thus possible to distinguish between material of lower quality or even material which is no longer suitable at all for being gripped and displaced.

According to a favourable aspect of the invention, the device or the assembly is provided with protecting means which protect persons and/or animals from coming unintentionally into contact with and/or from being injured by the operative components of the device. According to a further inventive feature, the protecting means comprise a protective bracket, and are preferably provided with, and are more preferably controllable by a means which supplies a signal when a person and/or an animal are/is detected or come/comes into contact with said protective bracket. According to again another inventive feature, the control means of the device are controlled by means of the signal. In a preferred embodiment according to the invention, the means additionally comprises an ultrasonic sensor or an infrared sensor or a camera.

The protecting means advantageously comprise the sensor, i.e. the 3D sensor. For, the latter can determine from the 3D image, if desired by means of image recognition, particulars in the image observed, such as an animal, person or object which should not be present there (for example in a storage container). There can then be supplied a signal which, for example, deactivates the gripper until the particularity has disappeared. It is thus possible to prevent injuries, but also unwanted damage to the gripper or the like, as well as contamination of the material to be gripped, such as feed.

In order to inspect the feeding place, a stable etc., in a simple manner, the assembly is advantageously provided with a comparator for comparing the recorded images with reference images and for supplying a comparison signal. A reference image may, for example, be an image of an empty feeding place or an empty milking robot. Differences between the recorded image and such a reference image may be an indication of the presence of undesirable objects, animals or persons, on the basis of which an alarm signal can be supplied, and the gripper or the like can be deactivated, if desired. Very advantageously, a reference image is an image of a storage container with material, in particular feed.

In particular, the 3D sensor is arranged to determine a height image and, advantageously, even a total volume, relating to that image. It is thus possible to establish in a simple manner whether that volume has increased, which is an indication that an undesirable object or the like is in or on the material, or that, for example in the case of unexpected volume decrease, there is unwanted feeding damage or the like.

In particular if the device or the assembly is provided with an alarm signal producing means for supplying an alarm signal with the aid of the comparison signal, it is possible to draw the farmer's attention to deviating situations.

The alarm signal can also be used to control a device directly, i.e. without the intervention of the farmer. It is particularly advantageous that, when the comparison signal indicates that few animals are present at the milking robot, the alarm signal controls such a device which activates animals to go to the milking robot. If the assembly comprises cubicles for animals, it is advantageous if the comparator is suitable for supplying a comparison signal which is indicative of whether or not a cubicle is occupied, and that the alarm signal comprises an alarm device for waking up animals which are sleeping in the cubicles. Animals can be actively driven from the cubicles if the assembly comprises a driving-out means for driving animals from the cubicles by means of the alarm signal. It is further advantageous if the device or the assembly comprises a driving means for driving animals to the milking robot. The driving means is preferably integrated with the gripper.

In some cases it is difficult or even impossible to dispose a rail to which the suspension construction can be fastened displaceably. In order to be able to make use of the gripper also in these cases, in an embodiment of the device or the assembly according to the invention, the rail is provided with an end, the control means are suitable for controlling the autonomous vehicle, the autonomous vehicle is provided with a rail portion along which the suspension device is displaceable, and the control means control the autonomous vehicle and the suspension device in such a manner that the suspension device is displaceable from the end of the rail to the rail portion. As a result thereof, the gripper is automatically moved from the rail to the autonomous vehicle.

By means of the sensor it is possible, as indicated, to determine very accurately a distance to an object. More precisely, the sensor image processing means calculate the distance from the receiver to the part of the observation area displayed on that receiver. For the sake of convenience, the latter distance will be denoted hereinafter by distance from the receiver to an object in that observation area. That object then advantageously relates to a feeding place, feed material etc.

By using such a matrix of receivers and by determining for these receivers a distance, like in this case by means of phase shifting of the emitted light, it is possible to obtain per observation a complete spatial image. This spatial image is in fact composed in one go, instead of by scanning. All this will be explained hereinafter in further detail.

In one embodiment, the sensor image processing means are arranged to form a three-dimensional image of the observation area, in particular of an object therein. In principle, the series of measured distances will suffice, but it may be advantageous to produce also a three-dimensional image, for example for visual control. In this case, the image formed is transferred to a display screen or the like. In this case, the distance may, for example, be displayed by false colours, or the image may be rotated, etc.

It should be noted that the optical device, i.e. the lens or lenses, is an optical system which casts an image of the observation area on the receivers, and which determines from what direction measurement takes place. There may be selected a wide or narrow angle of view of the observation area. Advantageously, the optical device comprises an adjustable optical device by means of which the angle of view can be selected, such as a zoom optical device.

In particular, the sensor image processing means are arranged to determine repeatedly an image of the observation area, in particular of an object therein. Although, in principle, it is sufficient to determine a three-dimensional or not three-dimensional image only once to perform the further control on the basis thereof, it is advantageous to perform this determination a plurality of times (successively). It is thus possible to take into account changing circumstances, and in particular movements of an animal or the like which is present.

Below, a sensor of the vehicle according to the invention will briefly be explained in further detail. The source of radiation emits electromagnetic radiation. Preferably light is used for this purpose, more preferably infrared radiation, more preferably near-infrared (NIR) radiation. The fact is that, for this purpose, suitable LEDs can be used which are very easy to drive by means of an electrically controllable supply current, and which are, in addition, very compact and efficient and have a long service life. However, it would also be possible to use other sources of radiation. The advantage of (near-)infrared radiation is that the radiation does not irritate animals which may be present.

The radiation is modulated according to a modulation frequency which is, of course, different from and much lower than the frequency of the electromagnetic radiation itself. The, for example, infrared light is in this case a carrier for the modulation signal. The modulation helps to determine the phase difference of emitted and reflected radiation. Preferably, the modulation is amplitude modulation.

By means of the emitted radiation, the distance is determined by measuring a phase shift of the modulation signal, by comparing the phase of reflected radiation with the phase of reference radiation. For the latter, the emitted radiation is mostly (almost) directly passed on to the receiver, anyhow with a known distance between the source and the receiver, so that the actual distance can easily be determined from the measured phase difference by applying

$$\text{Distance} = \tfrac{1}{2} \times \text{wavelength} \times (\text{phase difference}/2\ pi),$$

wherein the wavelength is that of the modulation signal. Please note that the above relation does not make allowance for unique determination of the distance which results from the fact that a phase difference, due to the periodicity, may be associated with a distance A, but also with A + n x (wavelength/2). For this reason, it may be sensible to select the wavelength of the amplitude modulation in such a manner that the distances which occur in practice are indeed uniquely determined.

Preferably, a wavelength of the amplitude modulation of the emitted radiation is between 1 mm and 20 m. Hereby, distances can be uniquely determined up to a maximum distance of between 0.5 mm to 10 m, which is associated with a modulation frequency of between 300 MHz to 15 kHz, which can be readily achieved in electric circuits for driving LEDs. It should be noted that, in practice, a sub-range is often selected, such as distances between 0.5 mm and 5 m, for the purpose of higher accuracy, because of an otherwise too weak signal. If desired, it is also possible to select even smaller or larger wavelengths. It is advantageous, for example, to select the wavelength in dependence on the expected to be determined distance. For example, when judging material to be gripped, that distance will often be between 10 cm and 100 cm, so that a preferred wavelength range will be between 20 cm and 200 cm, and consequently a preferred frequency range will be between 1.5 MHz and 150 kHz.

In a preferred embodiment, a wavelength is adjustable, in particular switchable, between at least two values. This provides the possibility of performing, for example, first a rough measurement of the distance and/or the size, by means of the large modulation wavelength. For, this wavelength provides a reliable measurement over great distances, albeit with an inherent lower resolution. Here, it is assumed for the sake of simplicity that the resolution is determined by the accuracy of measuring the phase, which can be measured, for example, with an accuracy of y%. By first measuring at the large wavelength it is possible to measure the rough distance. Subsequently, it is possible to perform, at a smaller wavelength, a more precise measurement, wherein the unique determination is provided by the rough measurement.

For example, first a measurement is performed at a wavelength of 2 m. The accuracy of the phase determination is 5%. The measured phase difference amounts to (0.8 x 2pi) ± 5%. The measured distance then amounts to 0.80 ± 0.04 m. The next possibility would be 1.80 ± 0.04 m, which, however, can be excluded on the basis of the expected distance. Subsequently, measurement is performed at a wavelength of 0.5 m. The measured phase difference amounts to 0.12 x 2pi modulo 2pi, and again with ±5%. This means that the distance amounts to 0.12 x 0.25 modulo 0.25, so 0.03 modulo 0.25 m. As the distance should moreover amount to 0.80 ± 0.04, the distance should be equal to 0.78 m, but now with an accuracy of 0.01 m. In this manner the accuracy can be increased step by step, and the different modulation wavelengths can be selected on the basis of the accuracy of the previous step.

Advantageously, the sensor, at least a provided sensor control, is arranged to automatically adjust the wavelength or, of course, the frequency, to the determined distance. This makes it possible to determine the distance and/or the size more accurately in a next step.

It is also advantageous, for example, first to determine roughly the position/distance/size at a large wavelength, and subsequently to determine the speed from the change of position, which can indeed be uniquely determined from the change of the phase difference, and then preferably measured at a smaller wavelength.

In a preferred embodiment, the source of radiation emits radiation in a pulsed manner, preferably at a pulse frequency of between 1 Hz and 100 Hz. Here, the pulse length is preferably not more than ½ part, more preferably 1 /n part of a pulse period. This provides radiationless pauses between the pulses, which may be used for other purposes, such as data transmission. For this purpose, the same source of radiation could then be used for example, but now with a different transmitter protocol; however, no measurement nevertheless being suggested or disturbed by the sensor. Additionally, it is possible to operate a different source of radiation and/or sensor in the pauses, in which case mutual interference neither takes place.

Preferably, the source of radiation has an adjustable light intensity and/or an adjustable angle of radiation, and/or the sensor has an adjustable sampling time. This provides the possibility of adapting the emitted radiation intensity or the emitted or, on the contrary, received amount of radiation energy to the light conditions, which may result in energy saving. In the case of a short distance and a strong reflecting capacity, for example, less radiation is required than in the case of a great distance and a relatively strong absorbing capacity, of, for example, dark feed or the like. It is also possible to adapt the angle of radiation to the angle of view of the sensor, because the radiation angle of view need not be greater than that angle of view. It may be advantageous, for example, when navigating through a space, to select a great angle of radiation, such as for example between 80° and 180°, because the angle of view used in that case will often be great as well. On the other hand, when 'navigating' on a part of a feed container or the like, the angle of radiation may also be selected smaller, such as for example between 30° and 60°. Of course, other angles of radiation are possible as well. And it is also possible, for example, to prolong the sampling time of the sensor in the case of a low signal, by smaller reflection or the like, such as, for example, from 8 ms to 16 ms.

In a particular embodiment, the receiver device, and advantageously also the source of radiation, is disposed rotatably and/or telescopically. This provides the advantage that for efficient navigation not the entire device or assembly has to be rotated, which is often not even possible, but only the receiver device and, possibly, also the source of radiation. It then 'looks about' as it were. This is in particular advantageous if the angle of view, and possibly also the angle of radiation, is relatively small, in order to ensure in this manner a relatively high resolution. However, it is also possible, of course, to dispose the receiver device and the source of radiation rigidly, for the purpose of a greatest possible constructional simplicity. Moreover, the possibility may thus be provided to extend the sensor, if desired, in order to obtain a more favourable observation position, and to retract the sensor when the latter is not required. In this retracted position the sensor is better protected.

In a special embodiment, the sensor comprises receivers which are positioned in such a manner that the sensor has an observation area with an angle of view of at least 180°, preferably of substantially 360°. In this case, it is possible to use either a single ultra wide-angle lens ('fisheye') to cast the image on the sensor, but it is also possible to use a sensor with a plurality of (image) surfaces, and associated lenses, or in other words a sensor with a plurality of sub-sensors, which comprise each a plurality of rows and columns of receivers. The advantage of this embodiment is that it is capable of overlooking in one go the complete forward field of view to move in one direction, and even of observing a complete around-image. It is obvious that this is particularly favourable for, for example, navigating and guiding.

In a particular embodiment, an angle of view of the observation area of the sensor is adjustable. The angle of view may then be selected, for example, in accordance with the observation object or area. It may also be advantageous to keep disturbing radiating objects, i.e. hot objects, such as incandescent lamps, away from the observation area by advantageously selecting the angle of view. For this purpose, it is possible, for example, to dispose an objective (lens) with variable focal distance ('zoom lens') in front of the sensor. It is also possible to select only a limited area of the receivers of the sensor. This is comparable with a digital zoom function.

Advantageously, at least a part of the sensor, in particular a source of radiation and/or the receiver device, is resiliently suspended from the frame. An advantage thereof is that, for example, when the sensor is used in the vicinity of an animal, such as a cow, this animal will less soon get injured by the sensor which, of course, often projects to some extent, and thus forms a risk for legs and the like. On the other hand, the source of radiation and/or the receiver device are/is thus better protected from jolts caused by, for example, the same legs.

In a favourable embodiment, the navigation means are operatively connected to the sensor, in particular to the sensor image processing means, and more in particular the navigation means comprise the sensor. As already pointed out now and then in the foregoing, the present invention may not only be applied for, for example, detection of and guidance to a desired object, but also, for example, for guiding the device or the assembly as a whole to, for example, a recharging point, etc. It is then possible for the navigation means to receive information via the sensor, in order thus to be able to map out a route.

In a particular embodiment, the sensor is arranged to distinguish the plurality of sub-objects, i.e. to recognize and process a plurality of objects in one image, if the object in the observation area comprises a plurality of sub-objects. This may be distinguished, for example, because in the group of points from which radiation is reflected there is a discontinuously changing distance between at least a first group of points and a second group of points. In a special embodiment, the sensor image processing means are arranged to determine a mutual distance between two of the plurality of sub-objects. This is, for example, advantageous when navigating, because the sensor or the navigation means are then able to determine whether the vehicle can pass through between the two sub-objects. In a favourable embodiment, the sensor image processing means are arranged to determine repeatedly, from an image of the observation area, a position and/or a mutual distance to the material to be removed. It is sufficient per se to determine only once the relevant position and/or the mutual distance to that material. However, it is advantageous to do this repeatedly, because the vehicle is thus able to anticipate, for example, unforeseen changes, such as an animal which comes into the path of the device, such as the gripper. Therefore, the device or the assembly according to this embodiment is capable of following in a very efficient manner an animal which may be present, so that it is possible, for example, to continue after the animal has disappeared. In a special embodiment, the sensor image processing means are arranged to calculate, from a change of the position and/or the mutual distance, the speed relative to a target or object in the environment, and in particular to minimize, advantageously on the basis of the calculated speed, the mutual distance to the target to be reached, which will effect an even more efficient navigation. As a result thereof, it is, for example, possible for the gripper to be guided very properly to a feeding place, feed loading place, etc.

In particular, the sensor image processing means are arranged to recognize at least one of a feeding place, a feed loading place, in particular feed present therein, an animal and a part of an animal. Such sensor image processing means may, for example, be based on pattern recognition or the like. In this case, a feeding place may, for example, relate to a feed trough (drinking trough), or more in general to a place where the feed should be supplied. A feed loading place may relate to a large storage container or the like. If such recognition means are incorporated in the sensor image processing means, or, of course, in a control device which is operatively connected thereto, the device is very well capable of finding in an efficient manner its way to an indicated target, such as a feeding place of an animal to be fed, or, on the contrary, around such a target. Needless to say that such a device is capable of saving a lot of labour.

Very advantageously, the image recognition means are arranged to determine the amount of material, such as the amount of feed, in a feed container or feed loading place. By means of the image recognition, in particular 3D, it is possible to determine in a reliable manner a height and/or volume of the feed, and thus also a possible need for supplying feed in that feed container. This holds both for a feed container and a feed loading place, or storage. The control means are advantageously arranged to supply a signal, in particular an alarm or order signal, if less than a predetermined minimum amount of material, in this case feed, is determined. This facilitates stock management.

The invention will now be explained in further detail with reference to the drawing, in which:

Figure 1 is a side view of a gripper which is provided, according to the invention, with a collecting device comprising a collecting element for collecting material falling unintentionally from the gripper;
Figure 2 shows the gripper according to Figure 1 when gripping the material to be displaced;
Figure 3 shows the gripper according to Figures 1 and 2 in cooperation with a feeding column which is provided with one or more feed troughs and a chute hopper for dropping the material gripped by the gripper;
Figure 4 is a diagrammatic side view of a gripper which supplies material to a milking robot feeding place;
Figure 5 is a diagrammatic side view of a gripper which supplies material to a mixing device;
Figure 6 is a diagrammatic side view of a gripper which is displaceable from a rail to an autonomous vehicle;
Figure 7 is a diagrammatic side view of a cleaning device for cleaning a gripper, and
Figure 8 is a diagrammatic side view of a sensor of the device according to the invention.

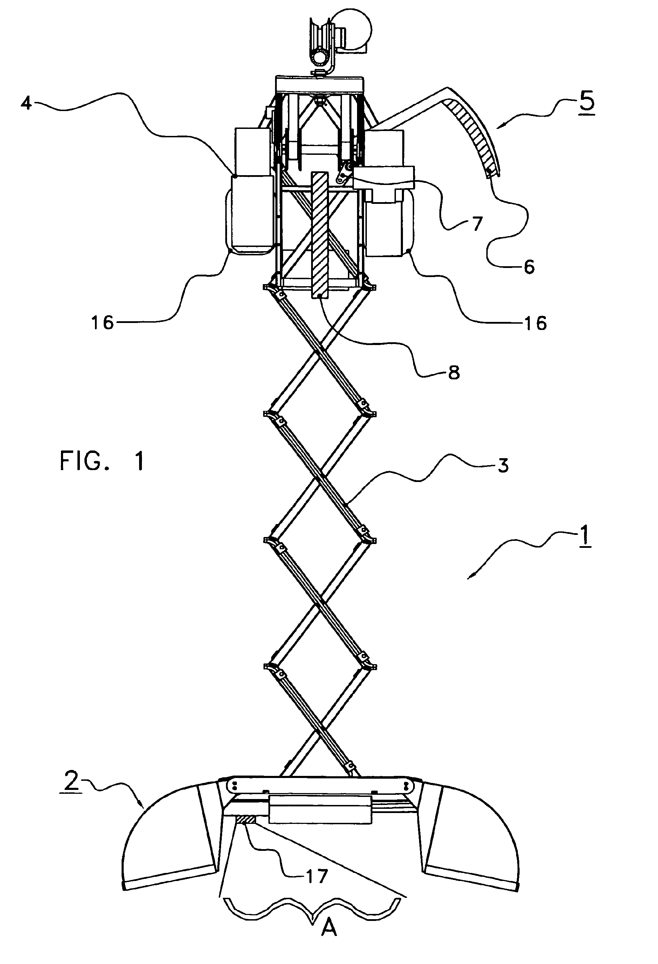

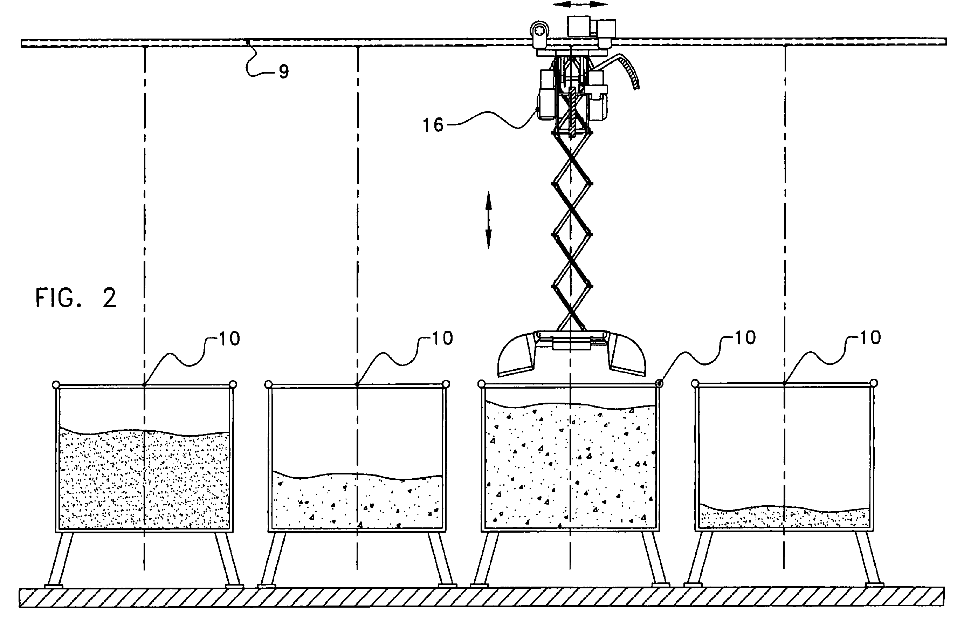

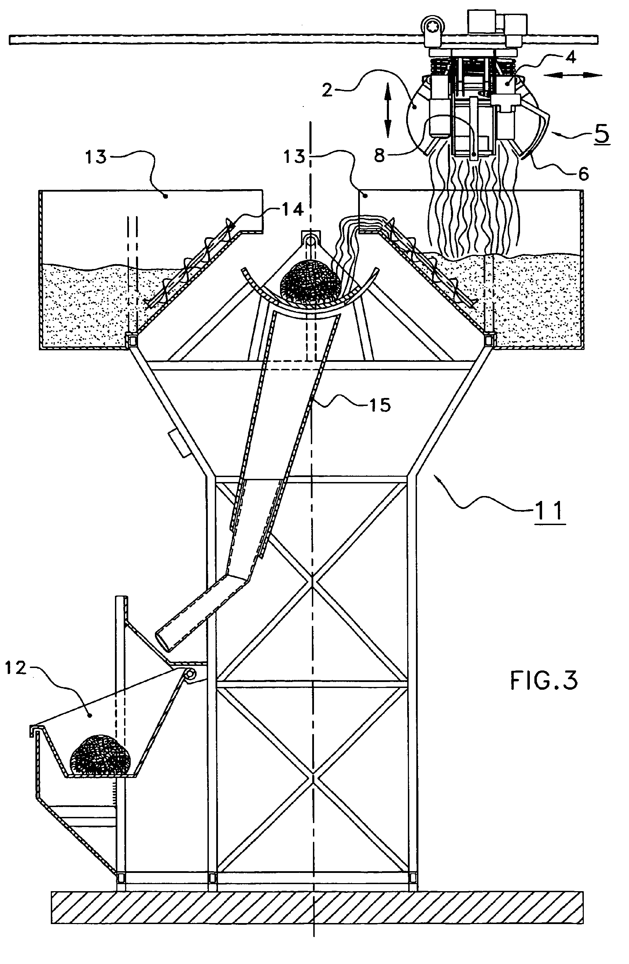

Figure 1 is a side view of a gripping device 1 for gripping and displacing material, such as, for example, roughage for animals, which device is provided with a gripper 2 designed in the present embodiment as a bucket-gripper. However, it will be obvious that, instead of a bucket-gripper, it is also possible to apply other suitable gripping elements, such as for example a fork-gripper; the choice of the gripping elements largely depends on the material to be gripped. The gripper 2 is connected to a displaceable suspension device 4 by means of an accordion-like hingeable arm construction 3. The gripping device 1 is further provided with a collecting device 5 comprising a collecting element 6 for collecting material falling unintentionally from the gripper 2. The gripping device 1 is further provided with control means comprising an operating element 7 by means of which, after the material has been gripped by means of the gripper 2, the collecting element 6 is capable of being brought from an inactive position, as shown in Figure 1, into a further position in which the collecting element 6 is able to collect material which is unintentionally lost by the gripper 2. In the present embodiment, the collecting element 6 is in the further position, remotely from the lower side of the gripper 2 which has been retracted as far as the displaceable suspension device 4 by means of the accordion-like hingeable arm construction 3. In the embodiment shown, the collecting element 6 is designed as a receptacle which is preferably provided on one side with an aperture via which the collected material can leave the collecting element 6. As shown in Figures 1-3, the gripping device 1 comprises a sensor 8, in particular the 3D sensor, by means of which the distribution and/or the height and/or the height difference and/or the volume of the material to be gripped and/or already dropped are/is determined. The sensor 8 supplies signals to the control means for the gripping device 1, in such a manner that the device is controlled fully automatically without the intervention of an operator. As shown in Figure 2, the displaceable suspension device 4 moves along a rail 9 which is suspended above several feed containers 10. The feed containers 10 may contain different sorts of material which are gripped from the feed container 10 by means of the gripper 2 and are displaced via the rail 9 to the feeding column 11 shown in Figure 3. The feeding column 11 comprises feed troughs 12 from which the animals can eat. The feeding column 11 is further provided with chute hoppers 13 for dropping the material gripped by the gripper 2. Each of the chute hoppers 13 is provided with a metering mechanism comprising a loading auger 14. By means of the loading auger 14 material can be dropped from the chute hoppers 13 via a chute 15 into the several feed troughs 12. If material is lost by the gripper 2 during transport of the gripping device 1, this material is collected by the collecting element 6 and is the first to be dropped into the chute hopper 13 by bringing the collecting devices 5 into the inactive position, after which the remaining material is subsequently dropped into the chute hopper 13 by opening the gripper 2. As shown in Figure 1, the gripping device 1 further comprises protecting means 16 which protect persons and/or animals from coming into contact in an undesirable violent manner with the displaceable suspension device 4. The protecting means 16 are designed in such a manner that, when an animal and/or a human being come/comes into contact with the gripping device 1, the latter is immediately put out of operation and, optionally, a warning is sent to a supervisor. The gripping device 1 is further provided with weighing means (not shown), with the aid of which the amount of material gripped and/or dropped is determined. As shown in Figure 1, the gripper 2 comprises quality determining means 17, such as for example an odour sensor and/or a colour sensor, by means of which the quality of the material gripped and/or to be gripped is determined. 17 may also determine an alternative position for a 3D sensor, according to the invention. It is then possible for the gripper 2 to record an image, in this case for example with an image field A, at the relevant place, i.e. at a shorter distance.

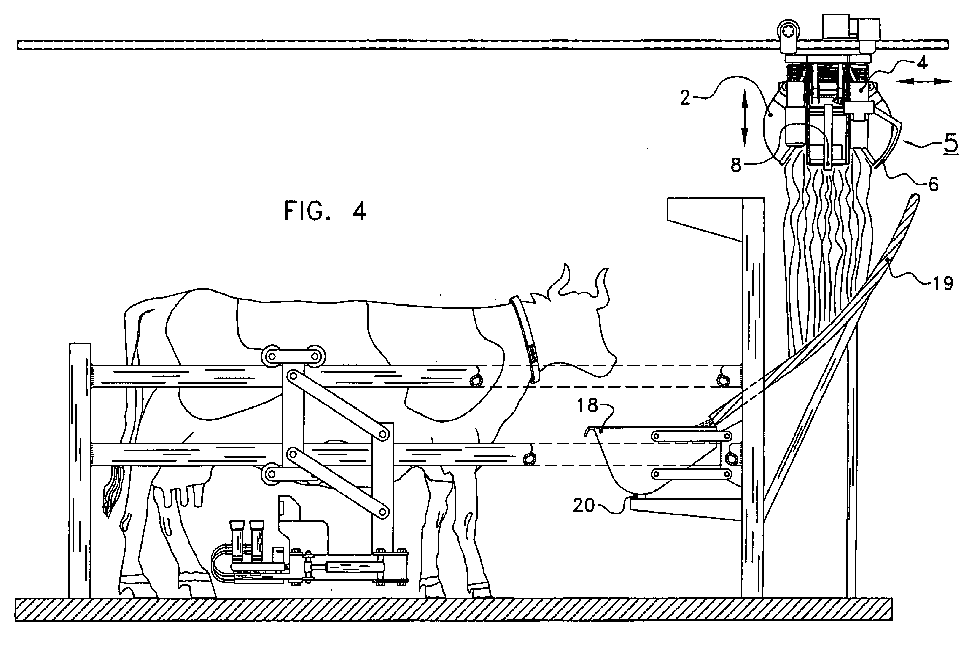

Figure 4 shows diagrammatically an assembly according to the invention in which the gripper 2 supplies, for example, feed to a milking robot feeding place, such as a feed trough 18. A milking robot for automatically connecting a teat cup to a teat of an animal is known per se and will not be described here in further detail for the sake of simplicity of the description. A diagrammatically shown channel-shaped chute 19 ensures that the feed will get into the feed trough 18. The feed trough 18 is provided with contents determining means 20 for determining the weight and/or the volume of the material present in the feed trough 18 and for supplying a weight signal and a quantity signal, respectively, to the control means. This makes it possible to supply material in accurately metered portions to the feed trough 18. It will be obvious that, remotely from the milking robot, there may be separate feeding places, such as for example a feed alley, the control means being suitable for displacing the gripper to the feeding place and for controlling the gripper to supply the material to the feeding place. Analogously to the feed trough 18, these separate feeding places may be provided with contents determining means for determining the weight and/or the volume of the material present in the feeding place and for supplying a weight signal and a quantity signal, respectively, to the control means. This makes it possible to design these separate feeding places as smaller ones than the known feeding places which are oversized in order to ensure that sufficient feed is present. According to the invention, when the feed troughs get empty, it is possible to supply a control signal to the gripper for the purpose of replenishing the feeding places.

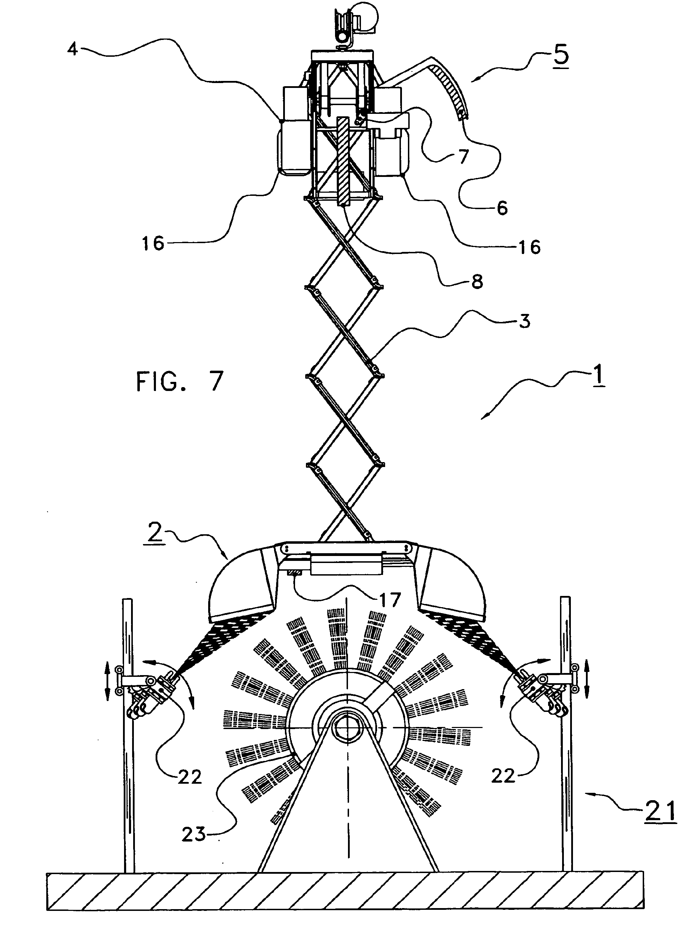

Frequent use of the gripper may lead to contamination of the gripper 2. As shown in Figure 7, an assembly according to the invention is provided with a cleaning device 21 which comprises, in the embodiment shown, two sprayers 22 and a brush 23, for cleaning the gripper 2. An automatic cleaning can be obtained if, in an embodiment of an assembly according to the invention, the gripper is movable by the control means towards the cleaning device, the cleaning device 21 being automatically activated by the control means when the gripper 2 is present at the cleaning device 21, which can be detected in a simple manner by detectors.

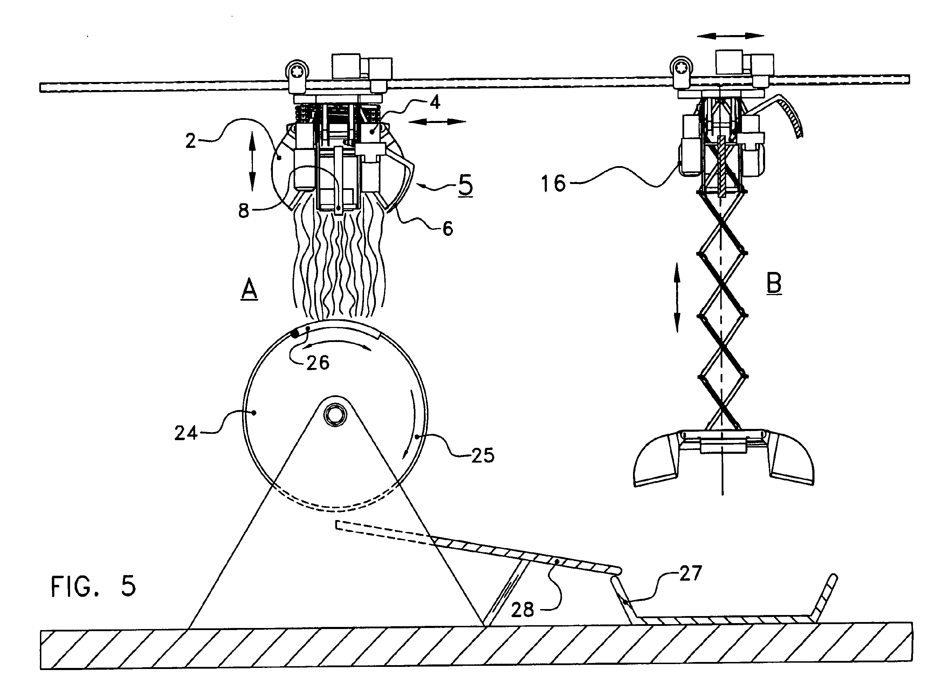

Although the gripper 2 is capable of gripping and displacing already mixed material, material can be mixed as desired in an embodiment of an assembly according to the invention in which the assembly is provided with a stationary mixing device 24 for mixing material, the control means being suitable for displacing the gripper 2 to the mixing device 24 (see Figure 5 position A) and for controlling the gripper 2 for supplying the material to the mixing device 24, and the control means being suitable for controlling the gripper 2 to grip material mixed by the mixing device 24 (as shown in Figure 5 position B) and to displace the mixed material to a feeding place. The mixing device 24 preferably comprises a self-emptying, rotatable drum 25. The drum 25 comprises an operable slide valve 26 in order to make it possible to receive material and to supply mixed material in a simple manner. In the embodiment shown, mixed material is supplied to a receptacle 27 with the aid of a guide means 28.

In a preferred embodiment of an assembly according to the invention, the assembly is provided with a display screen (not shown), and the gripper 2 is provided with a camera 29 (Figure fi) for recording images, the recorded images being displayable on the display screen. This makes it possible to inspect the stable or the area within which the gripper 2 can be displaced. According to the invention, the camera 29 is preferably a 3D sensor. The images can be viewed by a farmer or automatically be analysed, it being possible to alarm the farmer in case of deviations. In particular if the assembly is provided with a milking robot for automatically connecting a teat cup to a teat of an animal, it is possible to determine by means of said milking robot how many animals will make use of the milking robot within a particular period of time. In a preferred embodiment of an assembly according to the invention, the camera is provided with a microphone (not shown) for recording sounds, and the display screen is provided with a loudspeaker for reproducing the recorded sounds.

In order to inspect the stable in a simple manner, it is advantageous if the assembly is provided with a comparator for comparing the recorded images with reference images and for supplying a comparison signal. The assembly is preferably provided with a comparator for comparing the recorded sounds with reference sounds and for supplying a comparison signal. In particular if the assembly is provided with an alarm signal producing device for supplying an alarm signal with the aid of the comparison signal, it is possible to draw the farmer's attention to deviating situations.

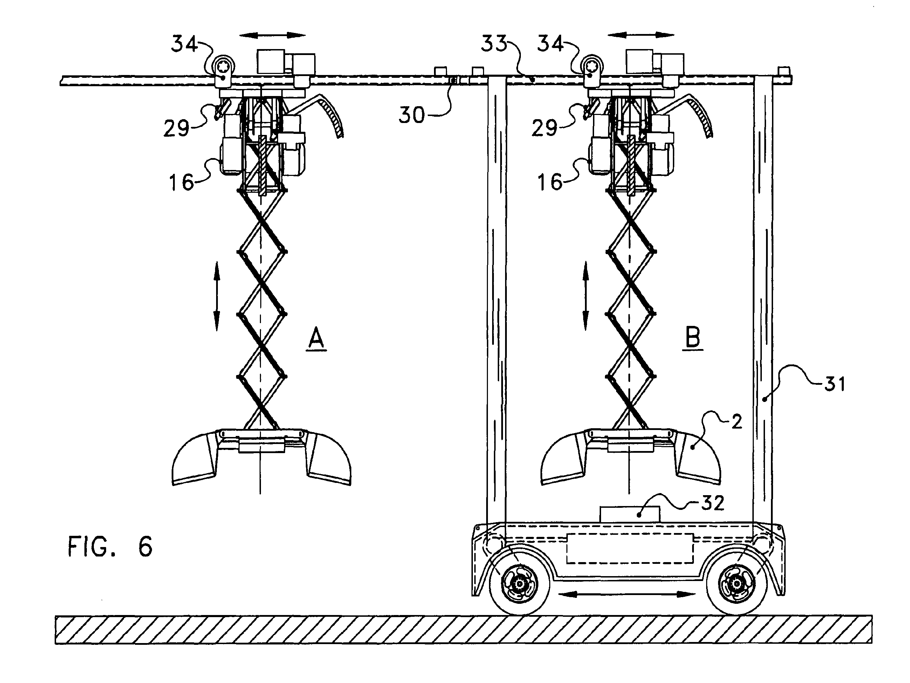

The alarm signal can also be used to control a device directly, i.e. without the intervention of the farmer. It is particularly advantageous that, when the comparison signal indicates that few animals are present at the milking robot, the alarm signal controls such a device which activates animals to go to the milking robot. If the assembly comprises cubicles for animals, it is advantageous if the comparator is suitable for supplying a comparison signal which is indicative of whether or not a cubicle is occupied, and that the alarm signal comprises an alarm device for waking up animals which are sleeping in the cubicles. Animals can be actively driven from the cubicles if the assembly comprises a driving-out means for driving animals from the cubicles by means of the alarm signal. It is further advantageous if the assembly comprises a driving device for driving animals to the milking robot. The driving means is preferably integrated with the gripper. In some cases it is difficult or even impossible to dispose a rail to which the suspension construction can be displaceably fastened. In order to be able to make use of the gripper also in these cases, in an embodiment of an assembly according to the invention, as shown in Figure 6, the rail 9 is provided with an end 30, the control means are suitable for controlling an autonomous vehicle 31 with control and navigation means 32, the autonomous vehicle 31 is provided with a rail portion 33 along which a suspension device 34 for the gripper 2 is displaceable, and the control means move the autonomous vehicle 31 and the suspension device 34 in such a manner that the suspension device 34 is displaceable from the end 30 of the rail 9 (as shown in Figure 6 position A) to the rail portion, as shown in Figure 6 position B. This means that the gripper is automatically moved from the rail to the autonomous vehicle.

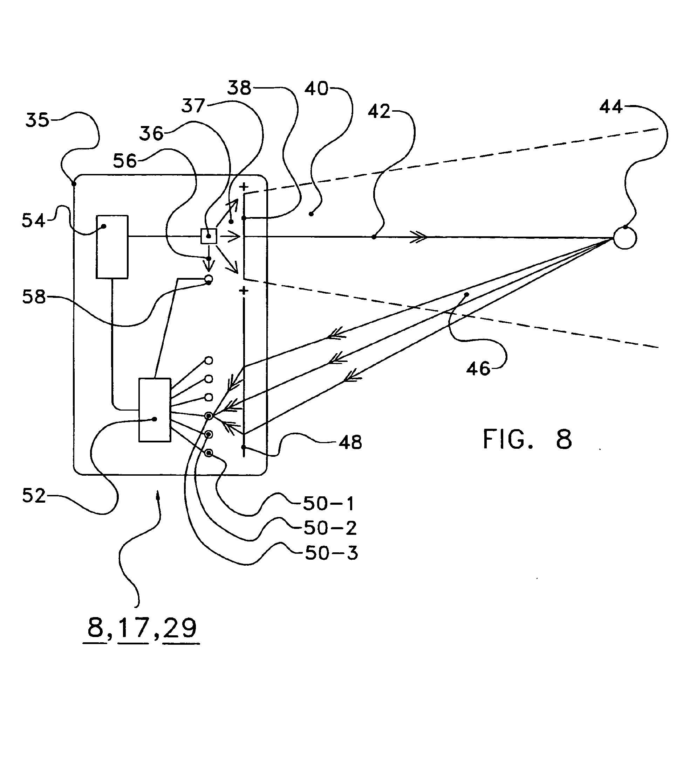

Figure 8 shows a diagrammatic view of a sensor according to the invention.

The sensor, such as component 8, 17 or 29, comprises a housing 35 with a light source 36 which emits light 37 which is formed by the exit optical device 38 into an outgoing beam 40. A first ray 42 thereof hits an object 44, such as a heap of material in a feed trough, and is reflected as a reflected beam 46 which is displayed, via the entrance optical device 48, on a number of receivers 50-1, 50-2, 50-3, .... The signals from those receivers are processed by the sensor image processing device 52 which is connected to the sensor control 54. The sensor control 54 is also connected to the light source 36 which also emits a reference ray 56 to the reference receiver 58.

The housing 35 is, for example, a moisture-proof and dust-proof housing of shock-proof synthetic material or metal, which may be fastened on the milking implement in a resilient or otherwise shock-absorbing manner. The housing 35 comprises a front side. At the front side there is included an exit optical device 38 which forms light 38 from one or a plurality of light sources 36 into a desired outgoing beam 40. The outgoing beam need not be wider than the desired observation area, and preferably corresponds thereto. For this purpose, the exit optical device 38 may advantageously be an adjustable or even a zoom lens.

In this embodiment, the light source 36 comprises infrared light emitting diodes (IR-LEDs), but may also comprise other colours of LEDs, or a laser diode, etc. It should be noted that everywhere in this document the term 'light' is used, but that this may generally be read as 'electromagnetic radiation'. The light source 36 is connected to the sensor control 54 which, for example, applies an amplitude modulation signal over the control current of the IR-LEDs of light source 36, or otherwise effects a modulation of the light 37. An exemplary modulation frequency is, for example, 100 kHz, but this may be selected within very wide margins, and even be adjustable. Incidentally, there may also be provided a separate light source control, which may be connected itself to the sensor control 54, or a general control device 16. The light intensity of the light source 36 may be adjusted within associated limits, for example, by increasing the supplied power.

There may be provided a not shown power supply for the light source 36, for the sensor. It should be noted that neither the power supply, nor any of the sensor control 54, the sensor image processing device 52 to be described hereinafter, nor even the light source 36, need be provided in the sensor, but may, for example, also be provided elsewhere on the vehicle. The connections may be wired or wireless connections.

In a variant, the exit optical device 38 is provided at the inner side of the front side, the front side being made from a material which is transmissible for the emitted light. In this manner the exit optical device 38, and in general the interior of the sensor, is protected from external influences, while a flat front side of synthetic material can easily be cleaned.

In the outgoing beam 40, or in many cases in the observation area, there is an object 44, such as a heap of material or the like, which is irradiated by a first ray 42. The object 44 will partially reflect that first ray 42 in a reflected beam. Only a small part thereof is depicted, which part is formed into an image by the entrance optical device 48. The entrance optical device 48 may also effect an adaptation of the image to the desired observation area or vice versa, and may, for example, be designed for this purpose as an adjustable lens or even as a zoom lens.

In the housing 35 there is further included a place-sensitive receiver device, such as a CMOS or a CCD or the like. The receiver device comprises a matrix with a plurality of rows and columns of receivers 50-1, 50-2, 50-3, ..., in the form of photodiodes or other light-sensitive elements. In an exemplary embodiment, this is a matrix of 64X64 photodiodes, but resolutions of 176X144, 640X480, and other, smaller or larger, matrices are likewise possible. For the sake of clarity, only a very small number of receivers, and only in one single row, are depicted in Figure 2. Here, the reflected beam is found to be displayed on the receiver 50-3, which will supply a signal. It will be obvious that, if, for example, the object 44 is larger, or the resolution of the sensor is greater, there will be per object 44 a plurality of receivers 50-1, ..., which will supply a signal. This is also the case if a plurality of objects 44 are present in the observation area.

Consequently, in the depicted case, (only) the receiver 50-3 supplies a signal, from which a phase can be determined by means of known techniques, such as sampling at four points, at a known frequency. For this purpose, the sensor image processing device 52 may, for example, be equipped with suitable circuits. The sensor control 54 may also be equipped for this purpose.

This phase is compared with the phase of a reference ray 56 which is transmitted to and received by a reference receiver 58. It is not relevant whether the latter is located immediately next to the light source 36, as long as the optical path length, and consequently the acquired phase difference of the reference ray 56, between the light source 36 and the reference receiver 58, is known.

For each receiver 50-1, ..., there is determined, from the phase difference between the reference ray 56 and the beam reflected on the receiver, a distance with the known relation between wavelength and phase difference. This takes place in principle substantially parallel and simultaneously for each of the receivers 50-1, ... There is thus created a 2D collection of distances, from which a spatial image of the observed object 44 can be formed.

If necessary, the measurement is also performed at one or more other modulation wavelengths, in order to achieve a unique determination in distance, or an increased accuracy. If desired, it is also possible to repeat the measurement at one and the same modulation wavelength, for example to increase the reliability, to take changes in the observation area into account, such as movement, or even to determine a speed of an object 44 in that observation area, by measuring the change of a distance. For this purpose, the sensor control 54 may be arranged in a simple manner. A favourable repeat speed is, for example, at least 16 Hz, because it is thus possible to display movements sufficiently flowing, at least for human beings. For higher accuracy of control, a higher repeat speed, such as 50 Hz or 100 Hz is even better. Other repeat speeds are possible as well, such as, for example, 1 Hz to 2 Hz, such as for unanimated objects, such as a feed loading place or a not shown milking machine.

In a particular embodiment, short light pulses may be emitted by the light source 36, provided that each light pulse comprises at least one whole wave, preferably two or more waves, of the modulated signal. At the modulation frequencies occurring in practice, this can easily be realized.

The device may be autonomous. The control of the drive is preferably connected to the sensor image processing means and/or navigation means, which are not separately depicted here. In fact, it is advantageous, for reasons of compactness, to combine both the sensor image processing means, the navigation means, as well as the not shown robot control means and other control means, if any, in one control device.

It will be obvious that the invention is not limited to the preferred embodiments of the unmanned vehicle shown in the figures and the above-described preferred embodiments, but that numerous modifications are possible within the scope of the accompanying claims.

**Claims**

1. Device for gripping and displacing material, which device is provided with a gripper (2) for gripping, then displacing and subsequently supplying the material,
   wherein the device comprises control means (32; 52) for controlling the displacement of the gripper (2) and for controlling the operation of the gripper (2) to supply the material, and a sensor (8; 17; 29) for forming an image of an observation area (A), which sensor is connected to the control means (32; 52), wherein the sensor (8; 17; 29) comprises:

   a source of radiation (36) for emitting modulated electromagnetic radiation (37), in particular light,
   a receiver device (50) for receiving electromagnetic radiation (46) reflected by an object (44) in the observation area, comprising a matrix with a plurality of rows and a plurality of columns of receivers (50-1, 50-2, 50-3),
   an optical device (48) for displaying the reflected electromagnetic radiation (46) on the receiver device (50), and sensor image processing means (52) which are arranged to determine for each of the receivers (50-1, 50-2, 50-3) a phase difference between the emitted electromagnetic radiation (37) and the reflected electromagnetic radiation (46) in order to calculate a distance from the receiver to the object (44).

2. Device or assembly comprising the device according to claim 1 and a feeding place, in particular a milking robot with a milking robot feeding place (18).

3. Device according to claim 1 or assembly according to claim 2, provided with contents determining means (20) for determining the weight and/or the volume of the material present and for supplying a weight signal and a quantity signal, respectively, to the control means (32; 52).

4. Device or assembly according to any one of the preceding claims, provided with a stationary mixing device (24) for mixing material, and with control means (32; 52) which are arranged to displace the gripper (2) to the mixing device and to control the operation of the gripper (2) to supply the material to the mixing device, and wherein the control means (32; 52) are suitable for controlling the operation of the gripper (2) to grip the material mixed by the mixing device (24) and to displace the mixed material, in particular to the feeding place (18).

5. Device or assembly according to any one of the preceding claims, provided with a display screen, and with a camera for taking images, wherein the taken images are displayable on the display screen, wherein the camera advantageously comprises the sensor (8; 17; 29).

6. Device or assembly according to any one of the preceding claims, comprising a comparator for comparing the taken images with reference images and for supplying a comparison signal.

7. Device or assembly according to claim 6, comprising an alarm signal supplying means for supplying an alarm signal with the aid of the comparison signal.

8. Device or assembly according to any one of the preceding claims, comprising a means with the aid of which the distribution and/or the height and/or the height difference of the material to be gripped and/or the material already dropped are/is determined, wherein the means preferably comprises the sensor (8; 17; 29).

9. Device or assembly according to claim 8, wherein the control means (32; 52) are automatically controlled by means of signals supplied by the sensor (8; 17; 29).

10. Device or assembly according to claim 9, wherein the control means (32; 52) are arranged in such a manner that, if there is a height difference in the material to be gripped, the material located at the highest or substantially the highest level will always be the first to be gripped and/or the material will be dropped at that place where the level of the dropped material is the lowest or substantially the lowest.

11. Device or assembly according to any one of the preceding claims, comprising an alarm device and/or an interruptor which supply/supplies a signal if there is insufficient material to be gripped by the gripper (2).

12. Device or assembly according to any one of the preceding claims, wherein the device comprises means with the aid of which the amount of material gripped and/or dropped is determined, wherein the means advantageously comprise the sensor (8; 17; 29).

13. Device or assembly according to any one of the preceding claims, provided with protecting means (16) which protect persons and/or animals from coming unintentionally into contact with and/or from being injured by the operative components of the device (1), in particular wherein the protecting means (16) comprise a protective bracket, and are preferably provided with, and are more preferably controllable by a means which supplies a signal when a person and/or an animal are/is detected or come/comes into contact with said protective bracket, wherein, in particular, the means additionally comprises an ultrasonic sensor or an infrared sensor or a camera (29).

14. Device or assembly according to any one of the preceding claims, wherein the sensor image processing means (52) are arranged to form a three-dimensional image of the observation area (A), in particular of an object (44) therein.

15. Device or assembly according to any one of the preceding claims, further comprising navigation means which are operatively connected to the sensor (8; 17; 29), in particular to the sensor image processing means (52).

**Patentansprüche**

1. Vorrichtung zum Ergreifen und Befördern von Material, wobei die Vorrichtung mit einem Greifer (2) zum Ergreifen,

# EP 2 129 214 B1

danach Befördern und anschließenden Zuführen des Materials versehen ist,
wobei die Vorrichtung ein Steuerungseinrichtung (32; 52) zum Steuern der Bewegung des Greifers (2) und zum Steuern des Betriebes des Greifers (2) zum Zuführen des Materials sowie einen Sensor (8; 17; 29) zum Erzeugen eines Bildes eines Beobachtungsbereichs (A) umfasst, wobei dieser Sensor mit der Steuerungseinrichtung (32; 52) verbunden ist, wobei der Sensor (8; 17; 29) Folgendes umfasst:

eine Strahlungsquelle (36) zum Aussenden modulierter elektromagnetischer Strahlung (37), insbesondere Licht, eine Empfängervorrichtung (50) zum Empfangen elektromagnetischer Strahlung (46), die durch einen Gegenstand (44) in dem Beobachtungsbereich reflektiert wird, die eine Matrix mit mehreren Reihen und mehreren Spalten von Empfängern (50-1, 50-2, 50-3) umfasst,
eine optische Vorrichtung (48) zum Anzeigen der reflektierten elektromagnetischen Strahlung (46) auf der Empfängervorrichtung (50), und
eine Sensorbildverarbeitungseinrichtung (52), die dafür konfiguriert ist, für jeden der Empfänger (50-1, 50-2, 50-3) eine Phasendifferenz zwischen der ausgesendeten elektromagnetischen Strahlung (37) und der reflektierten elektromagnetischen Strahlung (46) zu bestimmen, um eine Entfernung von dem Empfänger zu dem Gegenstand (44) zu berechnen.

2. Vorrichtung oder Anordnung, welche die Vorrichtung nach Anspruch 1 und einen Fütterungsplatz umfasst, insbesondere ein Melkroboter mit einem Melkroboter-Fütterungsplatz ( 18).

3. Vorrichtung nach Anspruch 1 oder Anordnung nach Anspruch 2, die mit einer Inhaltsbestimmungseinrichtung (20) versehen ist, um das Gewicht und/oder das Volumen des vorhandenen Materials zu bestimmen und um ein Gewichtssignal bzw. ein Mengensignal an die Steuerungseinrichtung (32; 52) auszugeben.

4. Vorrichtung oder Anordnung nach einem der vorhergehenden Ansprüche, die mit einer stationären Mischvorrichtung (24) zum Mischen von Material sowie mit einer Steuerungseinrichtung (32; 52) ausgestattet ist, die dafür konfiguriert ist, den Greifer (2) zu der Mischvorrichtung zu bewegen und den Betrieb des Greifers (2) zum Zuführen des Materials zu der Mischvorrichtung zu steuern, und wobei die Steuerungseinrichtung (32; 52) dafür geeignet ist, den Betrieb des Greifers (2) so zu steuern, dass dieser das durch die Mischvorrichtung (24) gemischte Material ergreift und das gemischte Material insbesondere an den Fütterungsplatz (18) zu befördern.

5. Vorrichtung oder Anordnung nach einem der vorhergehenden Ansprüche, die mit einem Bildschirm und mit einer Kamera zum Aufnehmen von Bildern ausgestattet ist, wobei die aufgenommenen Bilder auf dem Bildschirm anzeigbar sind, wobei die Kamera vorteilhafterweise den Sensor (8; 17; 29) umfasst.

6. Vorrichtung oder Anordnung nach einem der vorhergehenden Ansprüche, die einen Komparator zum Vergleichen der aufgenommenen Bilder mit Referenzbildern und zum Ausgeben eines Vergleichssignals umfasst.

7. Vorrichtung oder Anordnung nach Anspruch 6, die eine Alarmsignalvorrichtung zum Ausgeben eines Alarmsignals mit Hilfe des Vergleichssignals umfasst.

8. Vorrichtung oder Anordnung nach einem der vorhergehenden Ansprüche, die eine Einrichtung umfasst, mit deren Hilfe die Verteilung und/oder die Höhe und/oder der Höhenunterschied des zu ergreifenden Materials und/oder des bereits abgeworfenen Materials ermittelt werden, wobei die Einrichtung vorzugsweise den Sensor (8; 17; 29) umfasst.

9. Vorrichtung oder Anordnung nach Anspruch 8, wobei die Steuerungseinrichtung (32; 52) automatisch mittels durch den Sensor (8; 17; 29) ausgegebenen Signalen angesteuert wird.

10. Vorrichtung oder Anordnung nach Anspruch 9, wobei die Steuerungseinrichtung (32; 52) so konfiguriert ist, dass im Falle eines Höhenunterschieds bei dem zu ergreifenden Material das Material, das sich auf höchster oder im Wesentlichen auf höchster Ebene befindet, immer als erstes ergriffen wird, und/oder das Material an jener Stelle abgeworfen wird, wo die Ebene des abgeworfenen Materials am niedrigsten oder im Wesentlichen am niedrigsten ist.

11. Vorrichtung oder Anordnung nach einem der vorhergehenden Ansprüche, die eine Alarmvorrichtung und/oder einen Unterbrecher zur Ausgabe eines Signals umfasst, wenn nicht genügend Material zum Greifen durch den Greifer (2) zur Verfügung steht.

12. Vorrichtung oder Anordnung nach einem der vorhergehenden Ansprüche, wobei die Vorrichtung eine Einrichtung

# EP 2 129 214 B1

danach Befördern und anschließenden Zuführen des Materials versehen ist,
wobei die Vorrichtung ein Steuerungseinrichtung (32; 52) zum Steuern der Bewegung des Greifers (2) und zum Steuern des Betriebes des Greifers (2) zum Zuführen des Materials sowie einen Sensor (8; 17; 29) zum Erzeugen eines Bildes eines Beobachtungsbereichs (A) umfasst, wobei dieser Sensor mit der Steuerungseinrichtung (32; 52) verbunden ist, wobei der Sensor (8; 17; 29) Folgendes umfasst:

eine Strahlungsquelle (36) zum Aussenden modulierter elektromagnetischer Strahlung (37), insbesondere Licht, eine Empfängervorrichtung (50) zum Empfangen elektromagnetischer Strahlung (46), die durch einen Gegenstand (44) in dem Beobachtungsbereich reflektiert wird, die eine Matrix mit mehreren Reihen und mehreren Spalten von Empfängern (50-1, 50-2, 50-3) umfasst,
eine optische Vorrichtung (48) zum Anzeigen der reflektierten elektromagnetischen Strahlung (46) auf der Empfängervorrichtung (50), und
eine Sensorbildverarbeitungseinrichtung (52), die dafür konfiguriert ist, für jeden der Empfänger (50-1, 50-2, 50-3) eine Phasendifferenz zwischen der ausgesendeten elektromagnetischen Strahlung (37) und der reflektierten elektromagnetischen Strahlung (46) zu bestimmen, um eine Entfernung von dem Empfänger zu dem Gegenstand (44) zu berechnen.

2. Vorrichtung oder Anordnung, welche die Vorrichtung nach Anspruch 1 und einen Fütterungsplatz umfasst, insbesondere ein Melkroboter mit einem Melkroboter-Fütterungsplatz ( 18).

3. Vorrichtung nach Anspruch 1 oder Anordnung nach Anspruch 2, die mit einer Inhaltsbestimmungseinrichtung (20) versehen ist, um das Gewicht und/oder das Volumen des vorhandenen Materials zu bestimmen und um ein Gewichtssignal bzw. ein Mengensignal an die Steuerungseinrichtung (32; 52) auszugeben.

4. Vorrichtung oder Anordnung nach einem der vorhergehenden Ansprüche, die mit einer stationären Mischvorrichtung (24) zum Mischen von Material sowie mit einer Steuerungseinrichtung (32; 52) ausgestattet ist, die dafür konfiguriert ist, den Greifer (2) zu der Mischvorrichtung zu bewegen und den Betrieb des Greifers (2) zum Zuführen des Materials zu der Mischvorrichtung zu steuern, und wobei die Steuerungseinrichtung (32; 52) dafür geeignet ist, den Betrieb des Greifers (2) so zu steuern, dass dieser das durch die Mischvorrichtung (24) gemischte Material ergreift und das gemischte Material insbesondere an den Fütterungsplatz (18) zu befördern.

5. Vorrichtung oder Anordnung nach einem der vorhergehenden Ansprüche, die mit einem Bildschirm und mit einer Kamera zum Aufnehmen von Bildern ausgestattet ist, wobei die aufgenommenen Bilder auf dem Bildschirm anzeigbar sind, wobei die Kamera vorteilhafterweise den Sensor (8; 17; 29) umfasst.

6. Vorrichtung oder Anordnung nach einem der vorhergehenden Ansprüche, die einen Komparator zum Vergleichen der aufgenommenen Bilder mit Referenzbildern und zum Ausgeben eines Vergleichssignals umfasst.

7. Vorrichtung oder Anordnung nach Anspruch 6, die eine Alarmsignalvorrichtung zum Ausgeben eines Alarmsignals mit Hilfe des Vergleichssignals umfasst.

8. Vorrichtung oder Anordnung nach einem der vorhergehenden Ansprüche, die eine Einrichtung umfasst, mit deren Hilfe die Verteilung und/oder die Höhe und/oder der Höhenunterschied des zu ergreifenden Materials und/oder des bereits abgeworfenen Materials ermittelt werden, wobei die Einrichtung vorzugsweise den Sensor (8; 17; 29) umfasst.

9. Vorrichtung oder Anordnung nach Anspruch 8, wobei die Steuerungseinrichtung (32; 52) automatisch mittels durch den Sensor (8; 17; 29) ausgegebenen Signalen angesteuert wird.

10. Vorrichtung oder Anordnung nach Anspruch 9, wobei die Steuerungseinrichtung (32; 52) so konfiguriert ist, dass im Falle eines Höhenunterschieds bei dem zu ergreifenden Material das Material, das sich auf höchster oder im Wesentlichen auf höchster Ebene befindet, immer als erstes ergriffen wird, und/oder das Material an jener Stelle abgeworfen wird, wo die Ebene des abgeworfenen Materials am niedrigsten oder im Wesentlichen am niedrigsten ist.

11. Vorrichtung oder Anordnung nach einem der vorhergehenden Ansprüche, die eine Alarmvorrichtung und/oder einen Unterbrecher zur Ausgabe eines Signals umfasst, wenn nicht genügend Material zum Greifen durch den Greifer (2) zur Verfügung steht.

12. Vorrichtung oder Anordnung nach einem der vorhergehenden Ansprüche, wobei die Vorrichtung eine Einrichtung

12

umfasst, mit deren Hilfe die Menge des ergriffenen und/oder abgeworfenen Materials bestimmt wird, wobei die Einrichtung vorteilhafterweise den Sensor (8; 17; 29) umfasst.

13. Vorrichtung oder Anordnung nach einem der vorhergehenden Ansprüche, die mit einer Schutzvorrichtung (16) versehen ist, die Personen und/oder Tiere vor einem versehentlichen Kontakt mit den Betriebskomponenten der Vorrichtung (1) und/oder einer Verletzung durch diese schützt, wobei die Schutzvorrichtung (16) insbesondere einen Schutzbügel umfasst und bevorzugt mit einer Einrichtung ausgestattet ist, und besonders bevorzugt durch eine Einrichtung gesteuert werden kann, die ein Signal ausgibt, wenn eine Person und/oder ein Tier detektiert werden oder in Kontakt mit dem Schutzbügel kommen, wobei die Einrichtung insbesondere zusätzlich einen Ultraschallsensor oder einen Infrarotsensor oder eine Kamera (29) umfasst.

14. Vorrichtung oder Anordnung nach einem der vorhergehenden Ansprüche, wobei die Sensorbildverarbeitungseinrichtung (52) dafür ausgelegt ist, ein dreidimensionales Bild des Beobachtungsbereichs (A), insbesondere eines Gegenstands (44) darin, zu erzeugen.

15. Vorrichtung oder Anordnung nach einem der vorhergehenden Ansprüche, die des Weiteren eine Navigationseinrichtung umfasst, die mit dem Sensor (8; 17; 29), insbesondere mit der Sensorbildverarbeitungseinrichtung (52), wirkverbunden ist.

## Revendications

1. Dispositif pour saisir et déplacer de la matière, ledit dispositif étant muni d'un organe de préhension (2) pour saisir, puis déplacer et par la suite fournir la matière,
   dans lequel le dispositif comprend des moyens de commande (32 ; 52) pour commander le déplacement de l'organe de préhension (2) et pour commander le fonctionnement de l'organe de préhension (2) pour qu'il fournisse la matière, et un capteur (8 ; 17 ; 29) pour former une image d'une zone d'observation (A), ledit capteur étant connecté aux moyens de commande (32 ; 52),
   dans lequel le capteur (8 ; 17 ; 29) comprend :

   une source de rayonnement (36) pour émettre un rayonnement électromagnétique modulé (37), en particulier de la lumière,
   un dispositif récepteur (50) pour recevoir un rayonnement électromagnétique (46) réfléchi par un objet (44) dans la zone d'observation, comprenant une matrice avec une pluralité de rangées et une pluralité de colonnes de récepteurs (50-1, 50-2, 50-3),
   un dispositif optique (48) pour afficher le rayonnement électromagnétique réfléchi (46) sur le dispositif récepteur (50), et
   des moyens de traitement d'image de capteur (52) qui sont agencés pour déterminer pour chacun des récepteurs (50-1, 50-2, 50-3) une différence de phase entre le rayonnement électromagnétique émis (37) et le rayonnement électromagnétique réfléchi (46) de façon à calculer une distance entre le récepteur et l'objet (44).

2. Dispositif ou ensemble comprenant le dispositif selon la revendication 1 et un emplacement d'alimentation, en particulier un robot de traite avec un emplacement d'alimentation de robot de traite (18).

3. Dispositif selon la revendication 1 ou ensemble selon la revendication 2, muni de moyens de détermination de contenu (20) pour déterminer le poids et/ou le volume de la matière présente et pour fournir respectivement un signal de poids et un signal de quantité aux moyens de commande (32 ; 52).

4. Dispositif ou ensemble selon l'une quelconque des revendications précédentes, muni d'un dispositif de mélange stationnaire (24) pour mélanger la matière, et de moyens de commande (32 ; 52) qui sont agencés pour déplacer l'organe de préhension (2) jusqu'au dispositif de mélange et commander le fonctionnement de l'organe de préhension (2) pour fournir la matière au dispositif de mélange, et dans lequel les moyens de commande (32 ; 52) sont adaptés pour commander le fonctionnement de l'organe de préhension (2) pour saisir la matière mélangée par le dispositif de mélange (24) et déplace la matière mélangée, en particulier jusqu'à l'emplacement d'alimentation (18).

5. Dispositif ou ensemble selon l'une quelconque des revendications précédentes, muni d'un écran d'affichage, et d'une caméra pour prendre des images, dans lequel les images prises peuvent être affichées sur l'écran d'affichage, dans lequel la caméra comprend de façon avantageuse le capteur (8 ; 17 ; 29).

**6.** Dispositif ou ensemble selon l'une quelconque des revendications précédentes, comprenant un comparateur pour comparer les images prises à des images de référence et pour fournir un signal de comparaison.

**7.** Dispositif ou ensemble selon la revendication 6, comprenant des moyens de fourniture de signal d'alarme pour fournir un signal d'alarme à l'aide du signal de comparaison.

**8.** Dispositif ou ensemble selon l'une quelconque des revendications précédentes, comprenant un moyen à l'aide duquel la distribution et/ou la hauteur et/ou la différence de hauteur de la matière à saisir et/ou de la matière déjà lâchée est/sont déterminée(s), dans lequel le moyen comprend de préférence le capteur (8; 17 ; 29).

**9.** Dispositif ou ensemble selon la revendication 8, dans lequel les moyens de commande (32 ; 52) sont commandés automatiquement au moyen de signaux fournis par le capteur (8 ; 17 ; 29).

**10.** Dispositif ou ensemble selon la revendication 9, dans lequel les moyens de commande (32 ; 52) sont agencés de telle manière que, s'il existe une différence de hauteur dans la matière à saisir, la matière située au niveau le plus haut ou sensiblement le plus haut sera toujours la première à être saisie et/ou la matière sera lâchée à l'endroit où le niveau de la matière lâchée est le plus bas ou sensiblement le plus bas.

**11.** Dispositif ou ensemble selon l'une quelconque des revendications précédentes, comprenant un dispositif d'alarme et/ou un interrupteur qui fournit/fournissent un signal s'il n'y a pas assez de matière à saisir par l'organe de préhension (2).

**12.** Dispositif ou ensemble selon l'une quelconque des revendications précédentes, dans lequel le dispositif comprend des moyens à l'aide desquels la quantité de matière saisie et/ou lâchée est déterminée, dans lequel les moyens comprennent de façon avantageuse le capteur (8 ; 17 ; 29).

**13.** Dispositif ou ensemble selon l'une quelconque des revendications précédentes, muni de moyens de protection (16) qui protègent des personnes et/ou des animaux de venir par inadvertance en contact avec les composants opérationnels du dispositif (1) et/ou d'être blessés par ceux-ci, en particulier dans lequel les moyens de protection (16) comprennent une console de protection, et sont de préférence munis de, et peuvent de manière encore préférée être commandés par des moyens qui fournissent un signal lorsqu'une personne et/ou un animal est/sont détecté(s) ou entre(nt) en contact avec ladite console de protection, dans lequel, en particulier, les moyens comprennent de plus un capteur à ultrasons ou un capteur à infrarouge ou une caméra (29).

**14.** Dispositif ou ensemble selon l'une quelconque des revendications précédentes, dans lequel les moyens de traitement d'image de capteur (52) sont agencés pour former une image tridimensionnelle de la zone d'observation (A), en particulier d'un objet (44) à l'intérieur de celle-ci.

**15.** Dispositif ou ensemble selon l'une quelconque des revendications précédentes, comprenant en outre des moyens de navigation qui sont connectés de façon opérationnelle au capteur (8 ; 17 ; 29), en particulier aux moyens de traitement d'image de capteur (52).

FIG. 1

FIG. 2

16

9

16

10   10   10   10

EP 2 129 214 B1

FIG.3

FIG. 4

EP 2 129 214 B1

FIG. 5

EP 2 129 214 B1

FIG. 6

FIG. 7

FIG. 8

8,17,29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 1030090